(19) Europäisches Patentamt
European Patent Office
Office européen des brevets

(11) EP 4 328 262 A1

(12) EUROPEAN PATENT APPLICATION
published in accordance with Art. 153(4) EPC

(43) Date of publication:
**28.02.2024 Bulletin 2024/09**

(21) Application number: **22792079.0**

(22) Date of filing: **22.04.2022**

(51) International Patent Classification (IPC):
***C08K 5/544*** (2006.01) ***C08L 79/08*** (2006.01)
***C08G 73/10*** (2006.01) ***H01M 4/62*** (2006.01)
***H01M 4/36*** (2006.01) ***H01M 4/38*** (2006.01)
***H01M 10/052*** (2010.01)

(52) Cooperative Patent Classification (CPC):
**C08G 73/10; C08K 5/544; C08L 79/08; H01M 4/36; H01M 4/38; H01M 4/62; H01M 10/052;** Y02E 60/10

(86) International application number:
**PCT/KR2022/095090**

(87) International publication number:
**WO 2022/225381 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2021 KR 20210052321**

(71) Applicant: **PI Advanced Materials Co., Ltd.**
**Chungcheongbuk-do 27818 (KR)**

(72) Inventors:
- **PARK, Se Joo**
  **Seoul 02869 (KR)**
- **HWANG, In Hwan**
  **Seoul 07037 (KR)**
- **LEE, Ik Sang**
  **Gumi-si Gyeongsangbuk-do 39347 (KR)**

(74) Representative: **Eisenführ Speiser**
**Patentanwälte Rechtsanwälte PartGmbB**
**Postfach 10 60 78**
**28060 Bremen (DE)**

# (54) POLYAMIC ACID COMPOSITION

(57) The present application relates to a polyamic acid composition, a binder resin composition for an electrode, an electrode active material composition comprising the binder resin composition, and an electrode comprising same, and provides a novel binder material which has excellent mechanical strength and excellent binding force by synthesizing polyamic acid and applying same as a silicone-based negative electrode binder.

EP 4 328 262 A1

## Description

[Technical field]

The present application relates to a polyamic acid composition, a binder resin composition for an electrode, an electrode active material composition including the same, and an electrode including the same.

[Background Art]

Lithium secondary batteries are mainly used in information and communication devices such as mobile phones and laptops, but recently, their use is expanding not only in these information and communication devices, but also in other industries such as electric vehicles.

The currently commercialized lithium secondary battery is a lithium ion secondary battery based on a graphite negative electrode and a lithium transition metal oxide positive electrode. However, as its performance reaches its theoretical limit, various alloy materials are being proposed as new candidates for negative electrode active materials in order to develop next-generation high-capacity secondary batteries applicable to energy storage systems and electric vehicles.

Among these lithium-reactive alloys, materials with high capacity are Si (4,100 mAh/g), Ge (1,600 mAh/g), and Sn (990 mAh/g) in this order, and among them, silicon (Si) is the most actively researched as an alternative to graphite due to its capacitive advantage. However, when a silicon negative electrode reacts with lithium ions to form an alloy and a dealloy, there is a problem in that capacity is rapidly reduced due to separation from the current collector due to the pulverization of particles due to a volume expansion of 400% or more. In order to solve this problem, various methods for controlling the shape of a negative electrode active material, such as a method of minimizing the absolute value of volume expansion by reducing a particle size, a method of coating a conductive layer on the particle to act as a buffer during volume expansion, and at the same time, reduce capacity and minimize volume expansion even if pulverization occurs, and the like have been attempted. However, considering the technological maturity and business competitiveness of the technology, since the above methods have too many limitations to overcome to be commercialized products, they are obstacles to commercialization.

As a practical method for realistic commercialization of a silicon (Si) negative electrode, efforts to improve the performance of silicon negative electrode active materials by utilizing polymer binder materials have been reported in domestic and foreign journals. The polymer binder not only maintains the binding between the active material and the conductive material in the negative electrode, but also performs various roles such as adhesion to the current collector and a conduction path of lithium ions inside the electrode. Therefore, the performance of the silicon negative electrode may be greatly influenced by the physical properties of the polymer binder, such as the binding force between the polymer binder and the surface of the active material, the stiffness of the polymer binder chain itself, and the adhesive strength between the electrode and the current collector.

However, since binders such as polyvinylidene fluoride (PVdF), carboxymethylcellulose (CMC), and polyacrylic acid (PAA), which are currently applied to a silicon negative electrode, have poor heat resistance and are vulnerable to overheating due to prolonged use when applied to batteries, it is necessary to compensate for these shortcomings.

On the other hand, in the case of polyimide (PI), when applied as a silicon-based negative electrode binder thanks to its excellent heat resistance, mechanical strength, and binding force, even though it has a basic linear polymer structure, it shows better performance than existing polyvinylidene fluoride (PVdF), carboxymethylcellulose (CMC), and polyacrylic (PAA), but initial side reactions or initial efficiency of lithium batteries may be a problem.

Therefore, the present application provides a novel binder material simultaneously having excellent mechanical strength and an excellent binding force by synthesizing polyamic acid and applying it as a silicon-based negative electrode binder.

[Disclosure]

[Technical Problem]

Therefore, the present application provides a novel binder material simultaneously having excellent mechanical strength and an excellent binding force by synthesizing polyamic acid and applying it as a silicon-based negative electrode binder. The technical problems of the present invention are not limited to the technical problems mentioned above, and other technical problems not mentioned will be clearly understood by those skilled in the art from the following description.

[Technical Solution]

Since the present invention can undergo various changes and have various embodiments, specific embodiments are illustrated in the drawings and described in detail. However, this is not intended to limit the present invention to specific embodiments, and it should be understood to include all modifications, equivalents and substitutes included in the spirit and scope of the present invention.

The terms used in the present application are only used to describe specific embodiments, and are not intended to limit the present invention. Singular expressions include plural expressions unless the context clearly dictates otherwise. In the present application, it is to be understood that the terms "include(s)" or "have(has)" and the like are intended to specify the presence of stated features, numbers, steps, operations, components, parts or combinations thereof, but do not preclude the presence or addition of one or more other features, numbers, steps, operations, components, parts and combinations thereof.

Unless defined otherwise, all terms used herein, including technical or scientific terms, have the same meaning as commonly understood by one of ordinary skill in the art to which this invention belongs. Terms such as those defined in a commonly used dictionary should be interpreted as having a meaning consistent with the meaning in the context of the related art, and should not be interpreted in an ideal or excessively formal meaning unless explicitly defined in the present application.

The present application relates to a polyamic acid composition for an electrode binder. The polyamic acid composition according to the present application may provide a binder resin composition, which may suppress detachment from the current collector due to contraction and expansion of a negative electrode active material layer and/or interfacial detachment between the negative electrode active material layer during repeated charging and discharging of a lithium secondary battery, and may improve the specific capacity, initial efficiency and relative capacity of the lithium secondary battery at the same time by having excellent strength and realizing excellent binding power by combining a specific composition as described below.

In one embodiment, the polyamic acid composition may include a polyamic acid including a diamine monomer and a dianhydride monomer as polymerization units; and an organosilane compound.

In one example, the organosilane compound may be included in an amount of 0.1 to 20 parts by weight based on 100 parts by weight of the polyamic acid. The lower limit of the organosilane compound content may be 0.5 parts by weight or more, 0.6 parts by weight or more, 0.7 parts by weight or more, 0.8 parts by weight or more, 0.9 parts by weight or more, 1 part by weight or more, 2 parts by weight or more, 3 parts by weight or more, 4 parts by weight or more, or 5 parts by weight or more, and the upper limit of the compound content may be 17 parts by weight or less, 15 parts by weight or less, 13 parts by weight or less, 10 parts by weight or less, 8 parts by weight or less, 7 parts by weight or less, 6 parts by weight or less, 5 parts by weight or less, 4 parts by weight or less, 3 parts by weight or less, 2.5 parts by weight or less, 2 parts by weight or less, 1.8 parts by weight or less, 1.5 parts by weight or less, or 1.3 parts by weight or less. When the content of the organosilane compound in the polyamic acid composition according to the present application is within the specific range as described above, a secondary battery exhibiting excellent physical properties such as high specific capacity through excellent mechanical strength and an excellent binding force can be provided.

The organosilane compound may include, for example, an aminoalkyl group or an alkoxy group in a molecular structure. Here, the aminoalkyl group means a group in which a substitutable site is substituted with an amino group in a straight or branched chain alkyl group having 1 to 6 carbon atoms, and may include, for example, an alkyl group having 1 to 4 carbon atoms or an alkyl group having 2 to 3 carbon atoms. The alkoxy group means '-O-alkyl group,' and the alkyl group in the alkoxy group may mean an alkyl group having 1 to 4 or 2 to 3 carbon atoms.

In detail, the organosilane compound may include a compound represented by Chemical Formula 1 below.

[Chemical Formula 1]

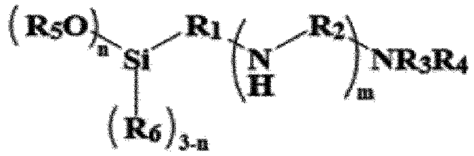

In Chemical Formula 1, $R_1$ is an alkylene group having 1 to 6, 1 to 4, or 2 to 3 carbon atoms; $R_2$ is an alkylene group having 1 to 4 or 2 to 3 carbon atoms; m is an integer from 0 to 5, 0 to 3, or 0 to 1; $R_3$ and $R_4$ are each independently an alkyl group having 1 to 3 carbon atoms or hydrogen; $R_5$ is an alkyl group having 1 to 4, 1 to 3, or 2 to 3 carbon atoms; $R_6$ is an alkyl group having 1 to 2 carbon atoms; and n may be an integer of 1 or more and 3 or less. Here, each alkyl group or alkylene group may have a straight or branched chain structure.

As an example, the organosilane compound may include, but is not limited to, aminomethyltriethoxysilane, 3-aminopropyltriethoxysilane (APTES), 3-aminopropyltrimethoxysilane (APTMS), aminoethyltriethoxy silane, aminobutyltriethoxysilane, aminopentyltriethoxysilane, aminohexyltriethoxysilane, or aminoheptyltriethoxysilane.

In particular, when the organosilane compound having a specific structure is combined with a specific diamine monomer and a specific dianhydride monomer as shown below, the compound may have excellent strength and realize an excellent binding force, and improve the performance of a lithium secondary battery at the same time.

In an embodiment of the present application, the diamine monomer may include a diamine monomer having at least one benzene ring, and a diamine monomer having one benzene ring. As an example, the diamine monomer may include a monomer represented by Chemical Formula 2 below.

[Chemical Formula 2]

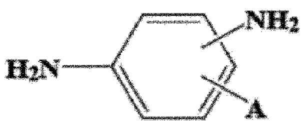

in Chemical Formula 2, A may be any one of hydrogen, an alkyl group having 1 to 3 carbon atoms, and a carboxyl group. Here, the carboxyl group means '-$CO_2H$.' As an example, the diamine monomer may include, but is not limited to, 1,4-diaminobenzene (or para-phenylenediamine, PPD), 1,3-diaminobenzene, 2,4-diaminotoluene, 2,6-diaminotoluene, and 3,5-diaminobenzoic acid (or DABA).

The present application may provide a composition that is applied to a secondary battery and realizes an excellent binding force and mechanical strength by controlling the type of diamine monomer.

In an embodiment of the present application, the dianhydride monomer is an aromatic tetracarboxylic dianhydride, and may include a dianhydride monomer having at least one benzene ring. As an example, the aromatic tetracarboxylic dianhydride may include, but is not limited to, pyromellitic dianhydride (or PMDA), 3,3',4,4'-biphenyltetracarboxylic dianhydride (or BPDA), 2,3,3',4'-biphenyltetracarboxylic dianhydride (or a-BPDA), oxydiphthalic dianhydride (or ODPA), diphenylsulfone-3,4,3',4'-tetracarboxylic dianhydride (or DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (or BTDA), bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalenetetracarboxylic dianhydride, 1,4,5,8-naphthalenetetracarboxylic dianhydride, and 4,4'-(2,2-hexafluoroisopropylidene)diphthalic dianhydride.

In particular, the dianhydride monomer may include a dianhydride monomer having two or more benzene rings, and as an example, may include a monomer represented by Chemical Formula 3 below.

[Chemical Formula 3]

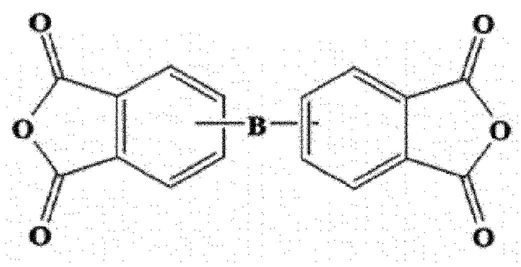

in Chemical Formula 3, B may include one or more of a single bond, an alkyl group having 1 to 4 carbon atoms, an ether group, a carbonyl group, an amide group, a thiol group, a sulfoxide group, and a sulfonyl group. Here, the ether group means -O-, the carbonyl group means -C(=O)-, the amide group means -C(=O)N(R'R')-, the thiol group means -S-, the sulfoxide group means -S(= O)-, and the sulfonyl group means -$SO_2$-.

Chemical Formula 3 may be a monomer represented by Chemical Formula 4 below.

[Chemical Formula 4]

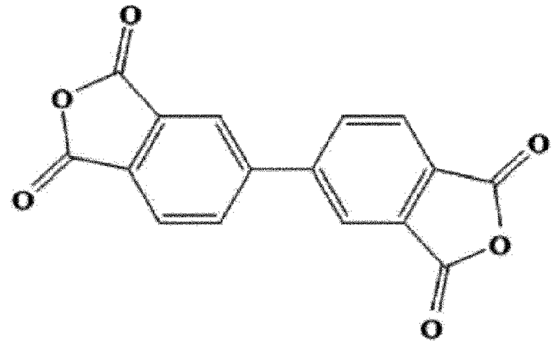

Since the dianhydride monomer implements sufficient flexibility for the volume change during charging and discharging of the secondary battery while imparting the toughness of polyimide by including the dianhydride monomer having the above specific structure, the binding force between the active material particles or between the active material particles and the metal current collector may be significantly improved, and at the same time, the specific capacity of the secondary battery may be improved.

As such, in the present application, by including a monomer having a specific structure among known monomers such as the diamine monomer and the dianhydride monomer, excellent modulus and adhesive strength properties may be exhibited at the same time, and furthermore, the characteristics of a secondary battery may be improved.

Furthermore, in the present application, the desired physical properties of the present invention may be realized by further adding an organosilane compound to a specific diamine monomer or a specific dianhydride monomer, and even when any one of the combinations of the above compositions is not included, it may be difficult to exhibit desired physical properties.

In one example, the diamine monomer and the dianhydride monomer may be dissolved in an organic solvent to carry out a polymerization reaction. The organic solvent may be used without particular limitation as long as it is commonly used for polyamic acid polymerization, and as an example, one or more selected from N-methyl-2-pyrrolidone, N,N-dimethylacetamide, N,N-dimethylformamide, dimethyl sulfoxide, tetramethyl urea, hexamethyl phosphate triamide, and $\gamma$-butyrolactone may be used. The content of the organic solvent is not particularly limited, but may be 3 to 10 parts by weight, for example, 5 to 8 parts by weight, based on 100 parts by weight of the total of the diamine monomer and dianhydride monomer.

In addition, in an embodiment of the present application, the polyamic acid composition may further include metal ions in an equivalent range of 0.01 to 1.25 times relative to 1 equivalent of a carboxyl group in the polyamic acid. For example, the metal ion may be derived from lithium hydroxide. In embodiments, the metal ion may be present in an amount of 0.01-fold equivalent or more, 0.03-fold equivalent or more, 0.05-fold equivalent or more, 0.1-fold equivalent or more, 0.2-fold equivalent or more, 0.3-fold equivalent or more, 0.4-fold equivalent or more, or 0.45-fold equivalent or more, relative to 1 equivalent of a carboxyl group in the polyamic acid, and the upper limit may be 1.1-fold equivalent or less, 1.0-fold equivalent or less, 0.9-fold equivalent or less, 0.8-fold equivalent or less, 0.7-fold equivalent or less, 0.6-fold equivalent or less, 0.45-fold equivalent or less, 0.3-fold equivalent or less, or 0.2-fold equivalent or less.

In the case of a lithium secondary battery, an irreversible reaction in which a binder resin and lithium ions are combined may occur during the first charging process, and this reaction consumes lithium ions, so that problems such as a decrease in capacity and a decrease in initial efficiency occur. In the present application, by adjusting the content of metal ions, it is possible to polymerize polyamic acid while reducing the initial side reaction and preventing the decrease in initial efficiency when applied as an electrode binder. In the present specification, "equivalent weight for carboxyl groups in polyamic acid," which defines the amount of metal ions, may mean the number (number of moles) of metal ions used for one carboxyl group in polyamic acid.

In an embodiment of the present application, the hydrogen of a carboxyl group in polyamic acid may be substituted with a metal ion. The metal ion may be derived from a metal salt. As the metal salt, LiOH, $Li_2CO_3$, $LiAlH_4$, $Li_2SO_4$, $LiNO_3$, LiCl, LiBr, LiI, $LiClO_4$, $LiBF_4$, $LiB10Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lower aliphatic lithium carbonate, lithium tetraphenyl borate, or imide may be used, but is not limited thereto. In the present application, a metal salt may be added to the composition, and the aforementioned carboxyl group may be substituted with the metal ions of the metal salt. The present application can realize excellent electrochemical performance through the specific composition. In one example, as the polyamic acid composition substituted with the metal ions through the metal salt is applied as an electrode binder, it has an effect of suppressing an initial side reaction, thereby preventing a decrease in initial efficiency.

In one example, the polyamic acid composition may include 1 to 20% by weight, 3 to 17% by weight, or 5 to 15% by weight of solids, based on the total weight. In the present application, by controlling the solid content of the polyamic acid composition, it is possible to prevent an increase in manufacturing costs and process time, which is caused by removing a large amount of solvent during a curing process, while controlling an increase in viscosity.

The polyamic acid composition of the present application may be a composition having a low viscosity characteristic. The polyamic acid composition of the present application may have a viscosity of 20,000 cP or less, 15,000 cP or less, 13,000 cP or less, or 11,000 cP or less, as measured at a temperature of 23 °C and a shear rate of 30 $s^{-1}$. The lower limit is not particularly limited, but may be 10 cP or more, 15 cP or more, 30 cP or more, 100 cP or more, 300 cP or more, 500 cP or more, or 700 cP or more. The viscosity may be measured, for example, using VT-550 manufactured by Haake GmbH, and may be measured at a shear rate of 30/s, a temperature of 23 °C, and a plate gap of 1 mm. The present application can provide a precursor composition having excellent processability by adjusting the viscosity range.

In one embodiment, the polyamic acid composition of the present application may have a weight average molecular weight of 10,000 to 300,000 g/mol, 50,000 to 280,000 g/mol, 70,000 to 260,000 g/mol, 100,000 to 240,000 g/mol, or 150,000 to 220,000 g/mol. The present application may excellently realize the desired physical properties of the present application, such as mechanical properties, by satisfying a specific range of weight average molecular weight. In the present application, the term "weight average molecular weight" means a conversion value with respect to standard polystyrene as measured by gel permeation chromatography (GPC).

In one example, the polyamic acid composition of the present application may have a modulus of 4.5 Gpa or more after curing, and for example, the modulus may be 4.6 Gpa or more, 4.7 Gpa or more, 4.8 Gpa or more, 4.9 Gpa or more, 5 Gpa or more, 5.1 Gpa or more, 5.2 Gpa or more, or 5.3 Gpa or more, and the upper limit is not limited, but may be 15 Gpa or less or 13 Gpa or less. As an example, the modulus may be measured by an ASTM D-882 method using a polyimide film after curing the polyamic acid composition to prepare the polyimide film.

In addition, the present application relates to an electrode active material composition including an electrode active material and the polyamic acid composition for the electrode binder described above.

In addition, the present application relates to an electrode including an electrode current collector and an electrode active material layer including the electrode active material composition described above.

According to one embodiment, the negative electrode may include polyimide derived from the polyamic acid composition.

The negative electrode includes a negative electrode active material, and for example, may manufactured by a method in which a negative electrode active material composition in which a negative electrode active material, a binder, an optional conductive material, and a solvent are mixed is prepared, and then molded into a predetermined shape or applied to a current collector such as copper foil.

The negative electrode active material is commonly used in the art and is not particularly limited. As non-limiting examples of the negative electrode active material, lithium metal, a metal capable of alloying with lithium, a transition metal oxide, a material capable of doping and de-doping lithium, and a material capable of reversibly intercalating and deintercalating lithium ions may be used and it is possible to use two or more thereof in a mixed or combined form.

Non-limiting examples of the transition metal oxide may be tungsten oxide, molybdenum oxide, titanium oxide, lithium titanium oxide, vanadium oxide, lithium vanadium oxide, and the like.

Examples of the material capable of doping and dedoping lithium include Si, $SiO_x$ ($0<x\leq2$), an Si-Y alloy (wherein Y is an element selected from the group consisting of alkali metals, alkaline earth metals, group 13 elements, group 14 elements, group 15 elements, group 16 elements, transition metals, rare earth elements, or combinations thereof and is not Si), Sn, $SnO_2$, an Sn-Y alloy (wherein Y is an element selected from the group consisting of alkali metals, alkaline earth metals, group 13 elements, group 14 elements, transition metals, rare earth elements, or combinations thereof and is not Sn), and one or more of these and $SiO_2$ may be mixed and used. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or combinations thereof.

A material capable of reversibly intercalating and deintercalating lithium ions is a carbon-based material, and any carbon-based negative electrode active material generally used in a lithium battery may be used. For example, the material may include crystalline carbon, amorphous carbon, or mixtures thereof. Non-limiting examples of the crystalline carbon include amorphous, platy, flake, spherical or fibrous natural graphite; or artificial graphite. A non-limiting example of the amorphous carbon includes soft carbon (soft carbon: lowtemperature calcined carbon), hard carbon, mesophase pitch carbide, calcined coke, etc.

According to one embodiment, as the negative electrode active material, an active material capable of realizing a high capacity, such as a silicon-based active material such as Si, $SiO_x$ ($0<x\leq2$), and Si-Y alloys, tin-based active materials such as Sn, $SnO_2$, and Sn-Y alloys, a silicon-tin alloy-based active material, or a silicon-carbon-based active material, may be used.

In this way, the active material capable of realizing a high capacity prevents the detachment of the active material by the binder bound between the active materials even when the active material expands and contracts due to

charging and discharging, and maintains the electron transfer path in the electrode, thereby improving the rate characteristics of a lithium battery.

The negative electrode active material may further include a carbon-based negative electrode active material in addition to the above-described silicon-based active material, tin-based active material, silicon-tin alloy-based active material, silicon-carbon-based composite, tin-carbon-based composite, or combinations thereof. In this case, the carbon-based negative electrode active material may be a mixture or a composite of the above-described silicon-based active material, tin-based active material, silicon-tin alloy-based active material, silicon-carbon-based composite, tin-carbon-based composite, or combinations thereof.

The form of the negative electrode active material may be a simple particle form or may be a nanostructure having a nano-sized form. For example, the negative electrode active material may have various forms such as nanoparticles, nanowires, nanorods, nanotubes, and nanobelts.

The binder used in the negative electrode active material composition may include the above-described polyamic acid composition according to an embodiment, and accordingly, may have an effect of suppressing the volume expansion of the negative electrode active material that may occur during charging and discharging of lithium. The binder containing the polyamic acid may be added in an amount of 0.1 to 20 parts by weight, 0.5 to 15 parts by weight, 0.7 to 15 parts by weight, or 1 to 10 parts by weight, based on 100 parts by weight of the negative electrode active material.

The negative electrode may optionally further include a conductive material in order to further improve electrical conductivity. As the conductive material, anything generally used in a lithium battery may be used, and as an example, conductive materials including carbon-based materials such as carbon black, acetylene black, ketjen black, and carbon fiber (for example, vapor-grown carbon fiber); metal-based materials such as metal powders or metal fibers such as copper, nickel, aluminum, and silver; conductive polymers such as polyphenylene derivatives, or mixtures thereof may be used. The content of the conductive material may be appropriately adjusted and used.

N-methylpyrrolidone (NMP), acetone, water, etc. may be used as the solvent. An amount of the solvent is 10 to 300 parts by weight based on 100 parts by weight of the negative electrode active material. When the content of the solvent is in the above range, the operation for forming the active material layer is easy.

The negative electrode active material composition may include other additives as necessary, such as an adhesion enhancer such as a silane coupling agent for improving the adhesive strength between a current collector and an active material, and a dispersant for improving the dispersibility of a slurry.

In addition, the current collector is generally made to have a thickness of 3 to 100 $\mu$m. The current collector is not particularly limited as long as it has conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, fine irregularities may be formed on a surface of the negative electrode current collector to strengthen the adhesion with the negative electrode active material, and the negative electrode current collector may take various forms such as films, sheets, foils, nets, porous materials, foam, non-woven materials, etc.

A negative electrode plate may be obtained by directly coating the prepared negative electrode active material composition on a current collector to prepare a negative electrode plate, or by casting the composition on a separate support and laminating a negative electrode active material film peeled from the support on a copper foil current collector. The negative electrode is not limited to the forms listed above and may have a form other than the above forms.

Separately, a positive electrode active material composition in which a positive electrode active material, a conductive material, a binder, and a solvent are mixed is prepared to manufacture a positive electrode.

As the positive electrode active material, a compound capable of reversible intercalation and deintercalation of lithium (lithiated intercalation compound) may be used. As the positive electrode active material, any metal oxide containing lithium may be used as long as it is commonly used in the art.

As the binder used in the positive electrode active material composition, any binder may be used as long as it serves to attach the positive electrode active material particles to each other well and to attach the positive electrode active material to the current collector well. For example, as the binder, one or more of polyvinyl alcohol, carboxymethylcellulose, hydroxypropylcellulose, diacetylcellulose, polyvinylchloride, carboxylated polyvinylchloride, polyvinylfluoride, polymers containing ethylene oxide, polyvinylpyrrolidone, polyurethane, polytetrafluoroethylene, polyvinylidene fluoride, polyethylene, polypropylene, styrene-butadiene rubber, polyamideimide, acrylated styrene-butadiene rubber, epoxy resin, and nylon may be used.

As the binder used in the positive electrode active material composition, the same binder as described in the negative electrode active material composition may be used.

As the conductive material and solvent in the positive electrode active material composition, the same conductive material and solvent as previously described in the negative electrode active material composition may be used. In some cases, it is also possible to form pores in the electrode plate by further adding a plasticizer to the positive electrode active material composition and the negative electrode active material composition. The content of the positive electrode active material, the conductive material, the binder, and the solvent is at a level commonly used in a lithium battery.

The positive electrode current collector has a thickness of 3 to 100 μm, and is not particularly limited as long as it has conductivity without causing a chemical change in the battery, and for example, stainless steel; aluminum; nickel; titanium; calcined carbon; or aluminum or stainless steel surface-treated with carbon, nickel, titanium, silver, etc. may be used. Fine irregularities may be formed on the surface of the current collector to increase the adhesion of the positive electrode active material, and various forms such as a film, a sheet, a foil, a net, a porous body, a foam, and a nonwoven body are possible.

The positive electrode and the negative electrode may be separated by a separator, and any separator commonly used in a lithium battery may be used. In particular, those having low resistance to ion migration of the electrolyte and excellent electrolyte impregnation ability are suitable. As the separator, an insulating thin film having high ion permeability and mechanical strength is used.

The pore diameter of the separator is generally 0.01 to 10 μm, and the thickness may be generally 5 to 20 μm. As examples of such a separator, an olefin-based polymer such as polypropylene; or a sheet or non-woven fabric made of glass fiber or polyethylene is used. When a solid polymer electrolyte is used as the electrolyte, the solid polymer electrolyte may also serve as a separator.

Among the separators, specific examples of the olefin-based polymer include polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, or a polypropylene/polyethylene/polypropylene three-layer separator may be used.

As the electrolyte, a lithium salt-containing non-aqueous electrolyte may be used. As the non-aqueous electrolyte, a non-aqueous electrolyte solution, a solid electrolyte, an inorganic solid electrolyte, and the like are used.

Lithium batteries may be classified into lithium ion batteries, lithium ion polymer batteries, and lithium polymer batteries according to the type of separator and electrolyte used, may be classified into cylindrical, prismatic, coin-type, pouch-type, or the like according to its shape, and may be divided into a bulk type and a thin-film type according to its size. In addition, both a lithium primary battery and a lithium secondary battery are possible.

The lithium battery may be a lithium ion battery. The lithium battery may be a lithium ion battery having a charging voltage of 4.3V or higher.

Lithium batteries are suitable for applications that require high capacity, high power and high temperature driving, such as electric vehicles (hybrid vehicles), in addition to applications such as existing mobile phones and portable computers, and may be used in a hybrid vehicle or the like by combining with an existing internal combustion engine, fuel cell, or supercapacitor. In addition, the lithium battery may be used in all other applications requiring high power, high voltage, and high temperature driving.

Methods for manufacturing these batteries are well known in the art, so that detailed descriptions are omitted.

[Advantageous Effects]

The present application relates to a polyamic acid composition, a binder resin composition for an electrode, an electrode active material composition including the same, and an electrode including the same, and provides a novel binder material simultaneously having excellent mechanical strength and an excellent binding force by synthesizing polyamic acid and applying it as a silicon-based negative electrode binder.

However, effects of the present invention are not limited to the effects mentioned above, and other effects not mentioned will be clearly understood by those skilled in the art from the description below.

[Mode for Inventions]

Hereinafter, preferred experimental examples are presented to aid understanding of the present invention. However, the following experimental examples are only for helping understanding of the present invention, and the present invention is not limited by the following experimental examples.

**Example 1**

449.4 g (4.53 mol) of methylpyrrolidone (NMP) solvent was input into a reactor equipped with a thermostat and filled with nitrogen. 36.6 g (0.12 mol) of 3,3',4,4'-biphenyltetracarboxylic acid dianhydride (BPDA) and 13.4 g (0.12 mol) of p-phenylenediamine (PPD) were added thereto, and then the mixture was dissolved using a mechanical stirrer at 25 °C for 1 hour. After the mixture was reacted at 70 °C for 3 hours, 0.6 g (0.0027 mol) of aminopropyltriethoxysilane (APTES) was added thereto, a polymerization reaction proceeded by stirring overnight to prepare a polyamic acid composition. Here, the weight average molecular weight of the polyamic acid composition measured by GPC (Tosoh Corporation product, HLC-8220GPC) was 195,764 g/mol.

**Comparative Example 1**

A polyamic acid composition was prepared in the same manner as in Example 1, except that aminopropyltriethoxysilane (APTES) was not added. Here, the weight average molecular weight of the polyamic acid composition measured by GPC (Tosoh Corporation product, HLC-8220GPC) was 124,629 g/mol.

**Comparative Example 2**

A polyamic acid composition was prepared in the same manner as in Example 1, except that 5 g of nano-silica (content corresponding to 1 part by weight relative to 100 parts by weight of the polyamic acid) was added instead of aminopropyltriethoxysilane (APTES). Here, the weight average molecular weight of the polyamic acid composition measured by GPC (Tosoh, HLC-8220GPC) was 115,954 g/mol.

For the prepared polyamic acid composition, physical properties were evaluated by the following methods, and the measured values were summarized in Table 1 below.

**Experimental Example**

**1. Adhesive strength evaluation**

The polyamic acid compositions prepared in the Example and Comparative Examples were applied on copper foil and formed into a film with a thickness of 1,000 μm using a doctor blade. Thereafter, a copper foil film laminated with polyamic acid was prepared by heat treatment at 120 °C for 4 hours, and adhesive strength was measured by performing an adhesion cross-cut test.

**2. Modulus evaluation**

The polyamic acid compositions prepared in the Example and Comparative Examples were applied on a glass substrate using a spin coater. Thereafter, heat treatment was performed at 120 °C for 12 hours under a nitrogen atmosphere to obtain a polyimide film. After cutting the obtained polyimide film to a width of 10 mm and a length of 10 mm, a modulus and a tensile strength were measured by the ASTM D-882 method using Instron 5564 UTM equipment from Instron. At this time, measurement was made at a cross head speed of 20 mm/min and a grip distance of 50 mm.

**3. Battery characteristics evaluation**

<Manufacture of negative electrode and lithium battery>

A negative electrode slurry was prepared by mixing 9.5 g of 10 to 100 nm silicon oxide particles ($SiO_x$) as a negative electrode active material and 0.5 g of the polyamic acid composition prepared in each of the Example and Comparative Examples as a binder.

An electrode plate obtained by applying the negative electrode slurry on a copper foil current collector was first dried at 80 °C for 5 minutes, pressurized with a press, and then dried in a vacuum oven at 150 °C for 6 hours to manufacture a negative electrode.

The obtained negative electrode, Li metal as a counter electrode, a polyethylene separator (ND420) as the separator, and a solution in which 1.15M LiPF6 is dissolved in a mixed solvent (3:7 volume ratio) of ethylene carbonate (EC) and ethyl methyl carbonate (EMC) and 5% by weight of fluoroethyl carbonate (FEC) as an electrolyte were used to manufacture a CR-2032 type coin half cell.

The discharge capacity (mAh/g), initial efficiency (%), and relative capacity (%) of the manufactured lithium batteries were measured and compared as follows.

**Specific capacity (mAh/g)**

After charging with a constant current until the voltage reached 0.005 V at a current density of 200 mA/g at room temperature, the charging was cut-off by reducing a charging rate to 1/20C when the limit voltage was reached. Then, discharging was performed at a constant current until the voltage reached 1.5 V at the same current. The specific capacity of the coin half cell was measured by performing one cycle of the constant current charge-constant voltage charge-constant current discharge.

**Initial efficiency (%)**

After charging with a constant current until the voltage reached 0.005 V at a current density of 200 mA/g at room temperature, the charging was cut-off by reducing a charging rate to 1/20C when the limit voltage was reached. Then, discharging was performed at a constant current until the voltage reached 1.5 V at the same current. After one cycle of the constant current charge-constant voltage charge-constant current discharge was performed, the initial efficiency according to one cycle was defined as Equation 1 below.

[Equation 1]

$$\text{Initial efficiency (\%)} = (\text{discharge capacity} / \text{charge capacity}) \times 100$$

**Relative Capacity (%)**

After charging with a constant current until the voltage reached 0.005 V at a current density of 200 mA/g at room temperature, the charging was cut-off by reducing a charging rate to 1/20C when the limit voltage was reached. Then, discharging was performed at a constant current until the voltage reached 1.5 V at the same current. Changes in the discharge efficiency of the battery were confirmed by increasing the discharging rate from 0.1 C to 1.0 C.

[Table 1]

| | Modulus (Gpa) | Adhesive strength | Specific capacity (mAh/g) | Initial efficiency (%) | Relative capacity (%) |
|---|---|---|---|---|---|
| Example 1 | 5.3 | 5B | 1,182 | 78.2 | 89.5 |
| Comparative Example 1 | 4 | 1B | 1,165 | 77.6 | 59.6 |
| Comparative Example 2 | 4.4 | 5B | 1,158 | 76.6 | 31.7 |

Although the present invention has been described with reference to the above Examples, a person having ordinary skill in the art can understand that various modifications and changes of the present invention are possible within the spirit and scope of the invention described in the following patent claims.

**Claims**

**1.** A polyamic acid composition for an electrode binder, comprising:

a polyamic acid including a diamine monomer and a dianhydride monomer as polymerization units; and
0.1 to 20 parts by weight of an organosilane compound based on 100 parts by weight of the polyamic acid.

**2.** The polyamic acid composition of claim 1, wherein the organosilane compound includes an aminoalkyl group or an alkoxy group in a molecular structure.

**3.** The polyamic acid composition of claim 1, wherein the organosilane compound includes a compound represented by Chemical Formula 1 below:

[Chemical Formula 1]

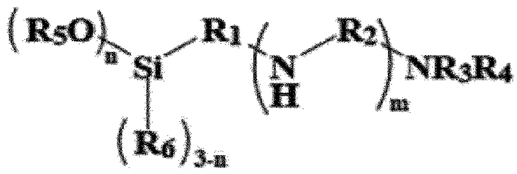

in Chemical Formula 1,
$R_1$ is an alkylene group having 1 to 6 carbon atoms, $R_2$ is an alkylene group having 1 to 4 carbon atoms, m is an integer between 0 and 5, $R_3$ and $R_4$ are each independently an alkyl group having 1 to 3 carbon atoms or hydrogen, $R_5$ is an alkyl group having 1 to 4 carbon atoms, $R_6$ is an alkyl group having 1 to 2 carbon atoms, and n is an integer of 1 or more and 3 or less.

**4.** The polyamic acid composition of claim 1, wherein the diamine monomer includes a diamine monomer having one or more benzene rings.

**5.** The polyamic acid composition of claim 1, wherein the diamine monomer includes a compound represented by Chemical Formula 2 below:

[Chemical Formula 2]

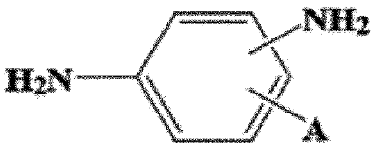

in Chemical Formula 2,
A is any one of hydrogen, an alkyl group having 1 to 3 carbon atoms, and a carboxyl group.

**6.** The polyamic acid composition of claim 1, wherein the dianhydride monomer includes a dianhydride monomer having two or more benzene rings.

**7.** The polyamic acid composition of claim 1, wherein the dianhydride monomer includes a monomer represented by Chemical Formula 3 below:

[Chemical Formula 3]

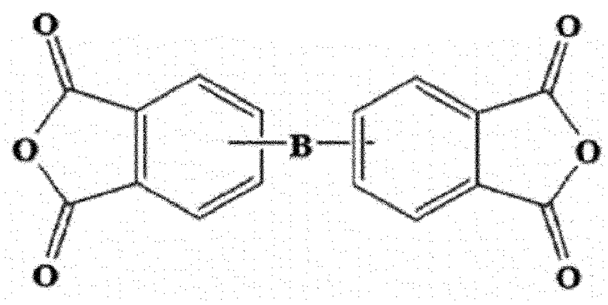

in Chemical Formula 2,
B includes one or more of a single bond, an alkyl group having 1 to 4 carbon atoms, an ether group, a carbonyl group, an amide group, a thiol group, a sulfoxide group, and a sulfonyl group.

**8.** The polyamic acid composition of claim 1, further comprising metal ions in an equivalent range of 0.01 to 1.25 times relative to 1 equivalent of a carboxyl group in the polyamic acid.

**9.** The polyamic acid composition of claim 1, comprising a solid content of 1 to 20% by weight based on the total weight.

**10.** The polyamic acid composition of claim 1, having a weight average molecular weight of 10,000 g/mol to 300,000 g/mol after curing.

**11.** An electrode active material composition comprising an electrode active material and the polyamic acid composition for an electrode binder of claim 1.

**12.** An electrode comprising an electrode current collector and an electrode active material layer including the electrode active material composition of claim 11.

## INTERNATIONAL SEARCH REPORT

International application No.
**PCT/KR2022/095090**

**A. CLASSIFICATION OF SUBJECT MATTER**

**C08K 5/544**(2006.01)i; **C08L 79/08**(2006.01)i; **C08G 73/10**(2006.01)i; **H01M 4/62**(2006.01)i; **H01M 4/36**(2006.01)i; **H01M 4/38**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

C08K 5/544(2006.01); H01M 10/052(2010.01); H01M 10/0525(2010.01); H01M 4/13(2010.01); H01M 4/131(2010.01); H01M 4/139(2010.01); H01M 4/1395(2010.01); H01M 4/38(2006.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 디아민(diamine), 디안하이드라이드(dianhydride), 폴리아믹산(polyamic acid), 전극(electrode), 바인더(binder)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-058361 A (MITSUI CHEMICALS INC) 28 March 2013 (2013-03-28)<br>See claims 1, 8 and 9; and paragraphs [0041], [0050], [0126]-[0132], [0136], [0155], [0157] and [0158]. | 1-7,9-12<br>8 |
| Y | KR 10-2017-0061417 A (SAMSUNG ELECTRONICS CO., LTD. et al.) 05 June 2017 (2017-06-05)<br>See abstract; and claims 1, 5 and 9. | 8 |
| Y | KR 10-2018-0022879 A (MITSUI CHEMICALS, INC.) 06 March 2018 (2018-03-06)<br>See claims 1-5. | 8 |
| A | JP 2013-077498 A (NIPPON ZEON CO., LTD.) 25 April 2013 (2013-04-25)<br>See claims 1-4; and paragraphs [0046]-[0054]. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 August 2022** | **18 August 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

INTERNATIONAL SEARCH REPORT

International application No.
PCT/KR2022/095090

C. DOCUMENTS CONSIDERED TO BE RELEVANT

| Category* | Citation of document, with indication, where appropriate, of the relevant passages | Relevant to claim No. |
|---|---|---|
| A | CN 112467086 A (INSTITUTE OF COAL CHEMISTRY, CHINESE ACADEMY OF SCIENCES) 09 March 2021 (2021-03-09)<br>See claims 1-10. | 1-12 |
| A | KR 10-2010-0133416 A (KABUSHIKI KAISHA TOYOTA JIDOSHOKKI) 21 December 2010 (2010-12-21)<br>See claims 1-20. | 1-12 |

Form PCT/ISA/210 (second sheet) (July 2019)

**INTERNATIONAL SEARCH REPORT**
**Information on patent family members**

International application No.
**PCT/KR2022/095090**

| Patent document cited in search report | Publication date (day/month/year) | Patent family member(s) | Publication date (day/month/year) |
|---|---|---|---|
| JP 2013-058361 A | 28 March 2013 | JP 5559757 B2 | 23 July 2014 |
| KR 10-2017-0061417 A | 05 June 2017 | US 10186709 B2 | 22 January 2019 |
| | | US 2017-0155151 A1 | 01 June 2017 |
| KR 10-2018-0022879 A | 06 March 2018 | CN 107925060 A | 17 April 2018 |
| | | EP 3333943 A1 | 13 June 2018 |
| | | JP 6105826 B1 | 29 March 2017 |
| | | TW 201721940 A | 16 June 2017 |
| | | TW I692902 B | 01 May 2020 |
| | | US 2018-0226677 A1 | 09 August 2018 |
| | | WO 2017-022796 A1 | 09 February 2017 |
| JP 2013-077498 A | 25 April 2013 | JP 5776475 B2 | 09 September 2015 |
| CN 112467086 A | 09 March 2021 | CN 112164769 A | 01 January 2021 |
| KR 10-2010-0133416 A | 21 December 2010 | CN 102007627 A | 06 April 2011 |
| | | CN 102007627 B | 09 April 2014 |
| | | EP 2267824 A1 | 29 December 2010 |
| | | EP 2267824 B1 | 07 May 2014 |
| | | JP 2009-259694 A | 05 November 2009 |
| | | JP 2009-259695 A | 05 November 2009 |
| | | JP 2010-033891 A | 12 February 2010 |
| | | JP 2010-062041 A | 18 March 2010 |
| | | JP 5129007 B2 | 23 January 2013 |
| | | JP 5129066 B2 | 23 January 2013 |
| | | JP 5136180 B2 | 06 February 2013 |
| | | KR 10-1193525 B1 | 22 October 2012 |
| | | KR 10-1227834 B1 | 30 January 2013 |
| | | KR 10-2012-0104442 A | 20 September 2012 |
| | | US 2011-0031935 A1 | 10 February 2011 |
| | | US 2013-0244110 A1 | 19 September 2013 |
| | | WO 2009-128319 A1 | 22 October 2009 |

Form PCT/ISA/210 (patent family annex) (July 2019)